# EUROPEAN PATENT APPLICATION

(11) **EP 3 992 832 A1**
(43) Date of publication of application: **04.05.2022**
(21) Application number: 21202285.9
(22) Date of filing: 12.10.2021
(51) Int. Cl.: G06F 30/15, G06F 113/16, G06F 119/02

(54) **METHOD, SYSTEM AND SOFTWARE FOR SELECTING AN OPTIMAL E/E ARRANGEMENT**

(30) Priority: 28.10.2020 EP 20204322
(71) Applicant: Aptiv Technologies Limited, St. Michael (BB)
(72) Inventor: GRONAU, Frank, Dublin, 2 (IE); BALL, Detlef, Dublin, 2 (IE); POTH, Hendrik, Dublin, 2 (IE); ATALAN, Kurdiya, Dublin, 2 (IE)
(74) Representative: Gaunt, Thomas Derrick

(57) **Abstract**

Method and system for selecting an optimal E/E arrangement from a plurality of E/E arrangement variants. An input block (11) receives wiring and component data (16,17) for a plurality of E/E arrangement variants. For each E/E arrangement variant, a calculation block (12) generates a first data record for a first current path starting with a first wire from a starting component and conducting through one or more intervening components to an end point. An output block (13) generates a first data log (19a) of the sequence of wires and intervening components along the first current path and any alternate current paths stemming from the intervening components. The output block (13) further calculates a failure probability value for each E/E arrangement and selects the optimal E/E arrangement from the plurality of E/E arrangement variants based on, in part, their calculated failure probability values.

## Description

### Introduction

The present disclosure relates to a method and system of selecting an optimal E/E arrangement and, in particular, selecting an E/E arrangement for a vehicle E/E architecture from a plurality of variants based on a calculated component failure probability in a vehicle E/E architecture. The disclosure also concerns software for performing the same.

### Background

As autonomous driving technology becomes more prevalent, the need for safer and more reliable electronic systems within vehicles increases. As a result, there has been a huge expansion in the amount of electronics included in a vehicle, with additional circuitry needed not only to implement the automated driving functions, but also to provide associated fault detection and back-up systems.

A consequence of the above is that Electrical/Electronic (E/E) architectures in vehicles has become an increasingly important aspect of vehicle design. For this, software platforms, such as PREEvision, are typically used for E/E development to provide a model-based development environment from system design through to the final wiring harness design. PREEvision is structured in several layers, thereby allowing teams of designers having different specialisms and competencies to work within their respective layer. For example, one design team may develop the circuit design at one level within PREEvision, with the topology and wiring harness design teams then subsequently designing their aspects on different levels above this.

In the case of the wiring harness design team, their focus is typically to minimise the cost of the wiring harness by reducing the length and weight of the cabling used to connect components within the architecture. For this, PREE vision provides a routing algorithm which calculates the shortest geometric path for segments between individual components based on the circuit topology design.

However, an issue with the above is that the routing algorithm used for wiring harness design may not account for other factors. For instance, a potentially important issue relates to the power management of components. For example, an autonomous driving controller is reliant on inputs from an array of peripheral components, such as radars, LIDARS, and cameras etc. Consequently, any power supply irregularities to any of the peripheral components could feasibly compromise the safe operation of the controller. At the same time, the peripheral components would typically be distributed around the vehicle, and therefore will be connected through the wire harness. This is relevant because the power supply path for a particular peripheral component in a complex modern vehicle will also likely pass through hundreds of other components, wiring sections and terminals, depending not only on the wiring harness design, but also the circuit design and topology. As such, the wiring harness designer has no awareness of the impact that their harness design choices may have on the power supply for particular components. Indeed, due to the complexity of modern E/E architectures, power supply issues may only be identified during manual testing.

The above is important because E/E architecture designers may have a number of variant arrangements available to them during the design process, but are unable to determine which design variant is optimal in terms of reliability. Moreover, it would be impractical or hugely expensive to construct a number of prototype E/E arrangements for every different design option in order to manually test which variant provided the best performance. As such, an adopted E/E architecture design may potentially be sub-optimal.

The present disclosure is therefore directed to addressing these issues.

### Summary

According to a first aspect there is provided a computer-implemented method for selecting an optimal E/E arrangement from a plurality of E/E arrangement variants, the method including the steps of: A) receiving component data for components used in the E/E arrangement variants; B) receiving wiring data for each of the E/E arrangement variants; C) selecting one of the E/E arrangement variants as a first E/E arrangement; D) selecting a starting component in the first E/E arrangement; E) identifying one or more terminals of the starting component using the component data; F) identifying one or more wires connected to the one or more terminals using the wiring data; G) generating a first data record for a first current path starting with a first wire and conducting through one or more intervening components to an end point, wherein the current path through each intervening component is identified based on identifying an output terminal for the respective component using the component data; H) generating a first data log of the sequence of wires and intervening components along the first current path, starting with the selected component; I) recursively interrogating the wiring and component data for each intervening component along the first current path in reverse order and updating the first data record to include one or more alternate first current paths starting with the respective intervening component and conducting forward through one or more intervening components to the end point or an alternate end point; J) updating the first data log to record the sequences of wires and intervening components along each identified alternate first current path; K) repeating steps G to J for any subsequent current paths starting with a subsequent wire connected to a terminal of the starting component; L) calculating a failure probability value for the first E/E arrangement based on a combination of reference failure values for the starting component and intervening components in the one or more current paths of the starting component; M) repeating steps C to L for each of the further E/E arrangement variants; and N)selecting the optimal E/E arrangement from the plurality of E/E arrangement variants based on, at least in part, their calculated failure probability values.

In this way, an optimal E/E arrangement can be identified based on accurately assessing the failure probability of different E/E arrangements arising from features of the power distribution paths of components within those respective arrangements. As such, the relationships between intervening components and wiring in the power distribution path for components within an E/E arrangement can be identified across multiple levels within, for instance, a PREEvision environment. This thereby allows potential failure and short-circuiting issues to be accounted for, and hence facilitates the selection of safer E/E architectures.

The method may be implemented on a computer system including a processor, a display, a user input device, and computer memory. The wiring data and component data may be stored in the computer memory. The processor may execute software instructions for identifying the terminals and wires, generating the data records and data logs, and outputting an output data file by storing the data file in the computer memory. The computer memory may include different types of memory, such as RAM and storage drives. It will also be understood that the computer system may be a distributed system. For example, the wiring and component data may be stored on computer memory in a server. Furthermore, processing may be performed by a processor at the server, with a user accessing the system from a workstation having the display and user input device.

In embodiments, step L includes generating a logical fault tree analysis structure by associating potential failure events within the E/E arrangement, and wherein the failure probability value is calculated based on combining the reference failure values according to the logical fault tree analysis structure.

In embodiments, the failure probability value is a failure in time value.

In embodiments, step L of selecting the optimal E/E arrangement is further based on a weighted cost value for each of the plurality of E/E arrangement variants.

In embodiments, the wiring data includes at least one of: circuit data for providing information regarding the connections of components within circuits, and wiring harness data for providing information regarding the connections of components through the wiring harness.

In embodiments, the component data includes specification data for providing information regarding the internal connections and terminals of the components.

In embodiments, the method further includes the step of generating a fault tree based on the logical fault tree analysis structure. In embodiments, the fault tree may be generated as a graphical representation for analysis.

In embodiments, step D of selecting a starting component includes retrieving a list of potential starting components and identifying a starting component within the E/E arrangement according to the list of potential starting components. In this way, the selection of components as starting points for current path interrogation may be automated.

In embodiments, the method further includes the step of repeating steps D to L for a second or subsequent starting component. In this way, the power distribution path information for a number of components within a vehicle's E/E architecture may be identified.

In embodiments, the end point is one of a ground and a power source.

According to a second aspect, there is provided a non-transitory computer readable medium storing software for selecting an optimal E/E arrangement from a plurality of E/E arrangement variants and including instructions which, when executed by a processor, perform the steps of: A) receiving component data for components used in the E/E arrangement; B) receiving wiring data for each of the E/E arrangement variants; C) selecting one of the E/E arrangement variants as a first E/E arrangement; D) selecting a starting component in the first E/E arrangement; E) identifying one or more terminals of the starting component using the component data; F) identifying one or more wires connected to the one or more terminals using the wiring data; G) generating a first data record for a first current path starting with a first wire and conducting through one or more intervening components to an end point, wherein the current path through each intervening component is identified based on identifying an output terminal for the respective component using the component data; H) generating a first data log of the sequence of wires and intervening components along the first current path, starting with the selected component; I) recursively interrogating the wiring and component data for each intervening component along the first current path in reverse order and updating the first data record to include one or more alternate first current paths starting with the respective intervening component and conducting forward through one or more intervening components to the end point or an alternate end point; J) updating the first data log to record the sequences of wires and intervening components along each identified alternate first current path; K) repeating steps G to J for any subsequent current paths starting with a subsequent wire connected to a terminal of the starting component; J) calculating a failure probability value for the first E/E arrangement based on a combination of reference failure values for the starting component and intervening components in the one or more current paths of the starting component; M) repeating steps C to L for each of the further E/E arrangement variants; and N) selecting the optimal E/E arrangement from the plurality of E/E arrangement variants based on, at least in part, their calculated failure probability values.

In embodiments, step L includes generating a logical fault tree analysis structure by associating potential failure events within the E/E arrangement, and wherein the failure probability value is calculated based on combining the reference failure values according to the logical fault tree analysis structure.

In embodiments, the non-transitory computer readable medium further includes instructions which, when executed by a processor, perform the step of generating a fault tree based on the logical fault tree analysis structure.

According to a third aspect, there is provided system for selecting an optimal E/E arrangement from a plurality of E/E arrangement variants, the system includes: an input block for receiving component data for components used in the E/E arrangement variants, and for receiving wiring data for each of the E/E arrangement variants; a selecting block for selecting each E/E arrangement variant and for selecting a starting component in each E/E arrangement; a calculation block for identifying one or more terminals of each starting component using the component data, and for identifying one or more wires connected to the one or more respective terminals using the wiring data, and for generating a first data record for a first current path starting with a first wire and conducting through one or more intervening components to an end point, wherein the current path through each intervening component is identified based on identifying an output terminal for the respective component using the component data; an output block for generating first data logs of the sequence of wires and intervening components along each first current path, starting with the selected component; and wherein the calculation block recursively interrogates the wiring and component data for each intervening component along each first current path in reverse order and updates each first data record to include one or more alternate first current paths starting with the respective intervening component and conducting forward through one or more intervening components to the end point or an alternate end point, wherein the output block updates each first data log to record the sequences of wires and intervening components along each identified alternate first current path, and wherein the calculation block generates data logs and recursively interrogates the wiring and component data for any subsequent current paths starting with a subsequent wire connected to a terminal of the respective starting component, and wherein output block further includes a failure probability determination module for calculating a failure probability value for each E/E arrangement based on a combination of reference failure values for the respective starting component and intervening components in the one or more current paths of the respective starting component, and wherein the output block further selects the optimal E/E arrangement from the plurality of E/E arrangement variants based on, at least in part, their calculated failure probability values..

In embodiments, the output block further generates a logical fault tree analysis structure by associating potential failure events within the E/E arrangement, and wherein the failure probability value is calculated based on combining the reference failure values according to the logical fault tree analysis structure.

According to a fourth aspect there is provided a method of assessing component failure probability in a vehicle E/E architecture, the method including the steps of: A) receiving wiring data and component data for the vehicle E/E architecture; B) selecting a starting component in the E/E architecture; C) identifying one or more terminals of the starting component using the component data; D) identifying one or more wires connected to the one or more terminals using the wiring data; E) generating a first data record for a first current path starting with a first wire and conducting through one or more intervening components to an end point, wherein the current path through each intervening component is identified based on identifying an output terminal for the respective component using the component data; F) generating a first data log of the sequence of wires and intervening components along the first current path, starting with the selected component; G) recursively interrogating the wiring and component data for each intervening component along the first current path in reverse order and updating the first data record to include one or more alternate first current paths starting with the respective intervening component and conducting through one or more intervening components to the end point or an alternate end point; H) updating the first data log to record the sequences of wires and intervening components along each identified alternate first current path; I) repeating steps E to H for any subsequent current paths starting with a subsequent wire connected to a terminal of the starting component; and J) outputting an output data file including the first and any subsequent data logs for fault tree analysis.

According to a fifth aspect, there is provided a non-transitory computer readable medium storing software for assessing component failure probability in a vehicle E/E architecture and including instructions which, when executed by a processor, perform the above method steps. According to a sixth aspect, there is provided system for assessing component failure probability in a vehicle E/E architecture.

### Brief Description of Drawings

Illustrative embodiments will now be described with reference to the accompanying drawing in which:
Figure 1 shows a simplified diagram of the components and power distribution paths within an electrical power steering architecture arrangement;
Figure 2 shows a schematic block diagram of a system according to first embodiment;
Figure 3 shows a schematic diagram of the current paths identified for a selected component within the electrical power steering architecture arrangement; and
Figure 4 shows a schematic diagram to explain the identification of the first and second current paths shown in Figure 3.

### Detailed Description

An illustrative embodiment of a software system for selecting an optimal E/E arrangement for a vehicle E/E architecture is described below. The software and method is described in relation to an example electrical / electronic arrangement, in this case being the vehicle's electrical power steering architecture. However, it will be understood that the invention may be applied to other vehicle E/E architectures and E/E arrangements within vehicle E/E architectures.

It will be understood that different E/E arrangement variants will perform analogous functions, but may include different components or have their components connected in different ways. For instance, in one variant, a particular component may be connected in one current path, whereas in another variant, the same component may be connected in a different current path.

The system and method for calculating a failure probably value, in this embodiment a failure-in-time value, for a single E/E arrangement variant will firstly be described. The process is then repeated for other arrangement variants. This thereby allows the failure probably values of different variants to be compared and the system may select an optimal E/E arrangement based on the variant with the lowest failure probability.

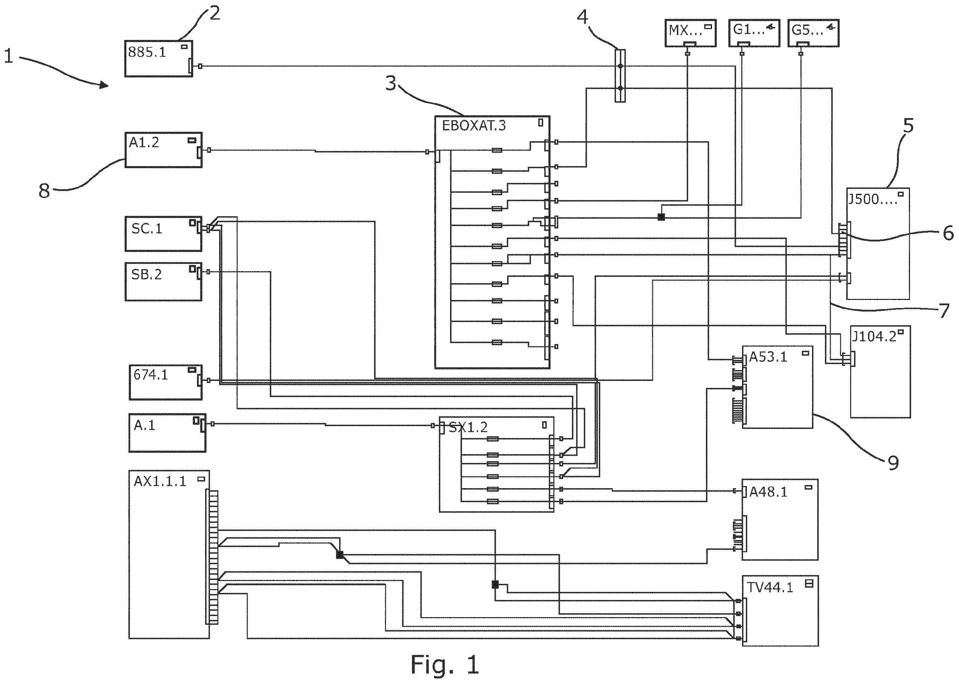

In this connection, Figure 1 shows a simplified diagram of the components and power distribution paths within the power steering architecture 1. The components include, for example, electronic control units (ECU) 5, inliners 5, fuse relay boxes 3, generators 9, and actuators. Each component may include a plurality of terminals 6, and various components are connected to one another via the terminals 6 through wires 7. Switches within the components may connect different components with one another during different operating conditions.

In this embodiment, the power steering architecture 1 is developed in PREEvision and includes data representing the wiring 7 between components and specification data for the components themselves.

The wiring data includes data representing both connections through the wiring harness and circuit board connections, albeit that these would be visualised in different layers within PREEvision. For example, whilst two components may appear adjacent in the circuit diagram, in reality they may be separated by meters of wiring harness and be routed through various terminal connectors and distribution blocks.

The component data includes data representing the terminal connections for that component, as well as information regarding switchable connections between different terminals. That is, some components may have two terminals, which may be represented as an input and an output. However, other components may have three or more terminals, for instance to provide alternative outputs when in certain switching configurations. Again, aspects of this component information may be visualised in different layers within PREEvision.

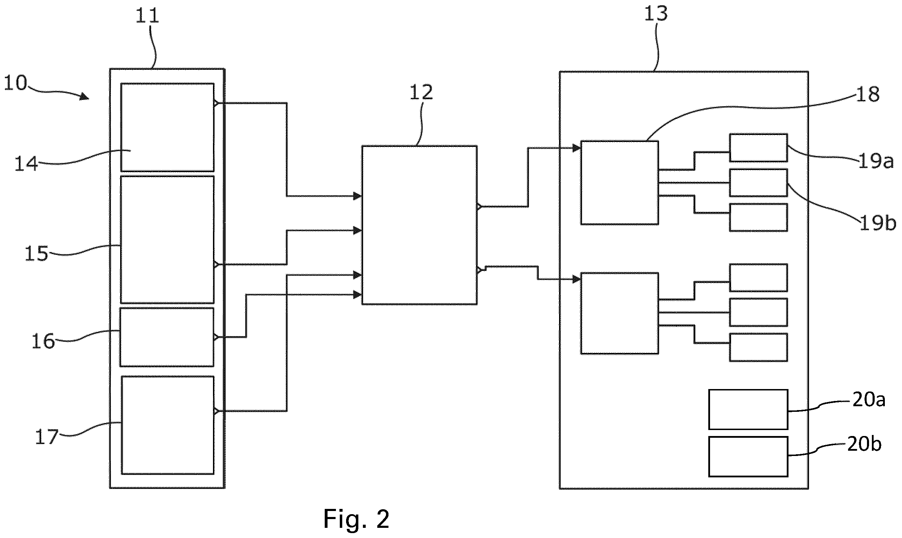

Figure 2 shows a schematic block diagram of a software system 10 according to the illustrative embodiment. In this embodiment, the system 10 is provided as a JAVA module plug-in for PREEvision. The system 10 includes an input block 11 which feeds inputs to a calculation block 12, which in turn generates output data through output block 13. The input block 11, calculation block 12, and output block 13 are executed by a processor of a computer system. The input block 11 may receive inputs from a user input device, such as a mouse, and display a user interface on a computer display for facilitating user selections. The input block 11, calculation block 12, and output block 13 may access computer memory for reading wiring and component data, as well as reading and writing record data and log data.

The input block 14 includes a component selection section 14 for selecting a starting component. The component selection section 14 presents the user interface on the computer display within the PREEvision environment for a user to make selections and set parameters for the process. In this embodiment, the component selection section 14 automatically selects a starting component from a list of potential starting components. For example, the system 10 may select components in turn from a list of components fitting a particular classification, such as ECUs. These components may also be ranked based on importance, with the highest ranked component within the current E/E arrangement being interrogated first. In other embodiments, the user may manually select a starting component.

The input block 14 further includes an end point designation section 15. In this embodiment, all grounding terminals and battery terminals are designated as end points by default. The system may also allow a user to manually select a specific point in the architecture as a designated end point to allow assessment between two selected points.

The input block 14 further receives wiring and component data from the PREEvision model through a wiring data section 16 and component data section 17, respectively. The wiring data section 16 and component data section 17 access the wiring and component data from the computer memory.

Based on the output of the calculation block 12, the output block 13 generates one or more output records 18 which include current path entries 19, as is described in further detail below.

The method employed when the software representing system 10 is executed will now be described with reference to Figures 2-4. The input block 11 receives the wiring and component data though the wiring data section 16 and component data section 17. The system 10 selects a starting component though the component selection section 14. In this example, the ECU 5 is identified as the starting component.

The calculation block 12 identifies the terminals 6 of the ECU 5 using the component data. The ECU's first terminal 6 connected to a wire 7 is identified using the wiring data, and a first temporary data record is generated in the computer memory in respect of a first current path starting with the ECU's first terminal 6.

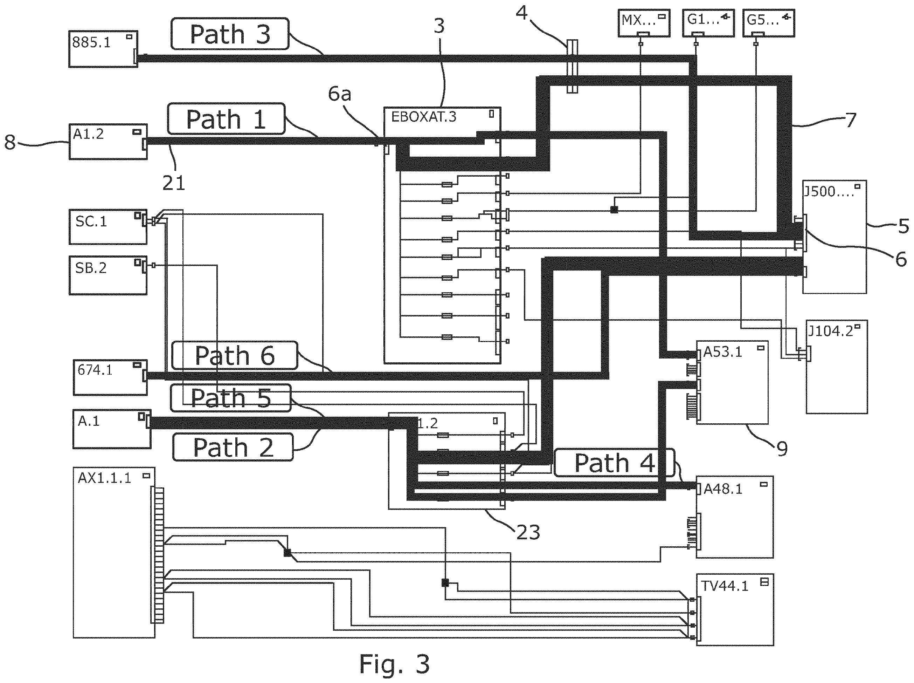

The calculation block 12 then tracks the wire 7 connected to the first terminal 6 to the inliner 4. The inliner 6 only has two terminals and therefore the output terminal 6 is easily identified by the calculation block 12 to allow the tracking to progress to the next component, which is fuse relay 3. In this instance, the calculation block 12 determines from the component data that the fuse relay 3 includes a plurality of terminals, with two being output terminals relevant to the particular input terminal connected to the inliner 4. The calculation block 12 selects the first output terminal 6a, logs this in the first temporary data record, and continues on to the battery 8, which is a designated end point. As such, a first current path 21 is identified in the first temporary data record, starting with the ECU 5 and continuing through the inliner 4, the fuse relay 3 to the battery 8, as shown in Figure 3.

The output block 13 then generates in the computer memory a first data log entry 19a of the sequence of wires 7 and components 5, 4, 3 along the first current path 21. For each, wire 7 and component 5,4,3 logged, specification information is recorded. For example, for wires 7 which are embodied in a physical wiring harness, the harness identifier and branch designation is logged, together with any associated terminal connector information. Equally, in the case of components, the component identifier and terminal information is logged.

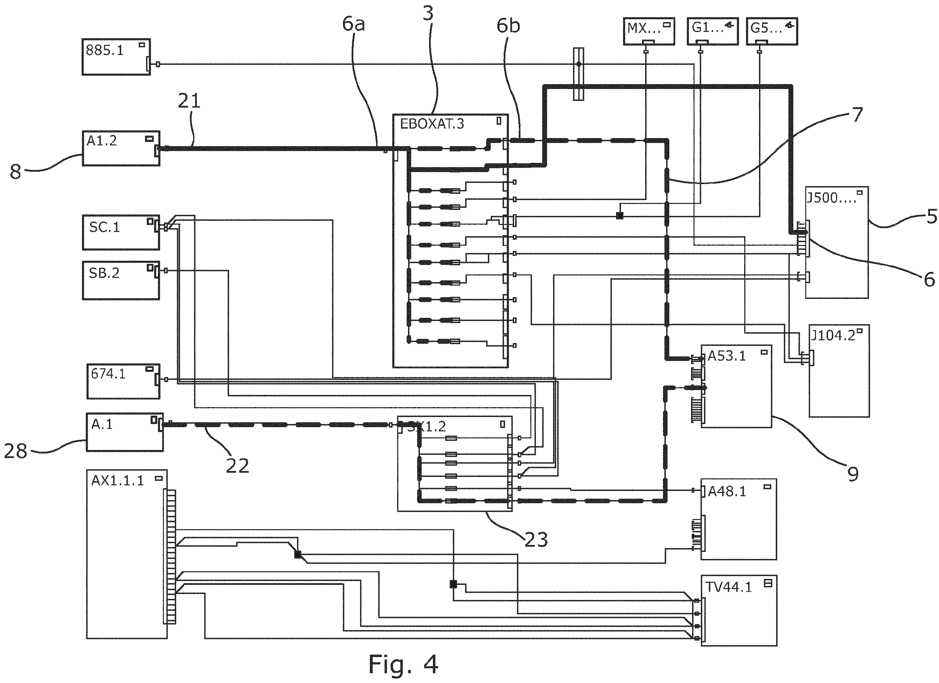

Once the first data log entry 19a for the first current path has been completed, the calculation block 12 then interrogates the wiring and component data for each intervening component 4,3 along the first current path 21 in reverse order. As such, the fuse relay is 3 is interrogated first to identify any alternate current paths. In this example, the second output terminal 6b connected by a wire 7 is identified, as shown in Figure 4. This wire is then tracked to a terminal of the generator 9. Although the component data indicates that the generator 9 has more than one output terminal, the wiring data indicates that only one of these is connected, and therefore the calculation block may continue to track the current path from the generator 9, through a second fuse relay 23 to a second battery 28. This therefore identifies a second current path 22, which follows the same route as the first current path 21 from the ECU 5, through the inliner 4, until the fuse relay 3, but then follows an alternate route from the second terminal 6b, through the generator 9 and second fuse relay 23 to the second battery 28, as shown in Figure 4.

Once the second current path 22 is identified, the output block 13 updates the first output record 18 to record a second data log entry 19b listing the sequence of wires and intervening components forward along the second current path 22, in line with the information recorded in respect of the first current path 21.

The calculation block 12 then recursively repeats the above process for the other wired terminals 6 of the ECU 5 to generate log entries 19 in the computer memory for further current paths associated with the selected component. In this example, six further current paths are identified, as shown in Figure 3. As such, the first output record 18 will contain six data log entries 19. Further output records 18 may also be generated for different selected starting components. For example, if the architecture 1 includes a plurality of ECUs, complete current path listings may be generated for each of them in an automated process.

The output block 13 outputs the one or more output records in a data file stored in the computer memory which thereby provides a listing of all the current paths associated with a particular selected component, as well as the sequence of intervening components along each current path until its respective end point. A fault tree for assessing the failure probability of components and wiring systems may then be generated from the stored data file. For example, in the architecture shown in Figure 3, the second, fourth and fifth current paths all route through the second fuse relay 23. Consequently, if this second fuse relay 23 has a known reference failure probability, for example based on operating parameters such as load and switching frequency, this will then influence the failure probability of the ECU 5 by virtue of its interconnection.

Furthermore, in another example, the output record may indicate that the first, second and sixth current paths contain wiring which is embodied in the same section of wiring harness. As such, a short-circuiting issue in the associated wiring harness may simultaneously cause faults in the ECU terminals associated with the first and sixth current paths.

Accordingly, with the above, the output block 13 generates a logical fault tree analysis structure which associates potential failure events within the E/E arrangement to other events.

The output block 13 further includes a failure probability determination module 20a which calculates a failure probability value for the respective E/E arrangement based on combining the reference failure values according to the logical fault tree analysis structure. That is, the reference failure values for each starting component and the intervening components in the one or more current paths of the respective starting component are combined, taking into account how these parts are connected and associated. The failure probability determination module 20a then updates the data file to include the failure probability value for each arrangement in the output records. The above process is repeated for each of the further E/E arrangement variants so that a data file is created for each E/E arrangement variants indicating the failure probability associated with each arrangement design.

The output block 13 further includes a selecting module 20b that selects the optimal E/E arrangement from the plurality of E/E arrangement variants based on their calculated failure probability values. That is, in this embodiment, the arrangement with the lowest failure probability is selected. However, in other embodiments, the output block may also apply other weightings, such as the cost of each arrangements, thereby allowing optimisation of cost and reliability.

The selected optimal E/E arrangement is then notified to the user, for instance, by outputting the result graphically on a display, thereby allowing the optimal E/E arrangement to be adopted for manufacture. This provides for improved E/E arrangements and architectures.

In embodiments, the fault tree analysis may also be used to provide information for subsequent fault diagnostics. For example, if an arrangement were to be adopted where the first, second and sixth current paths contain wiring which is embodied in the same section of wiring harness, this information may allow failure detection systems to be configured to respond to the detection of simultaneous faults associated with these. For example, even if a fault hasn't been detected in the second current path 22, and indicator of issues in both the first and sixth current paths may prompt pre-emptive maintenance repairs. In this way, faults in less critical current paths may be used to identify a high failure probability in critical components on other current paths which are only associated by virtue of their common physical location within the wiring harness assembly.

In this connection, embodiments may further include a fault tree generator for generating a graphical fault tree based on the output data file. The fault tree generator may display the generated fault tree on the computer display or output the graphic in a printable document.

It will be understood that the illustrative example E/E architecture above has been significantly simplified. In practice, vehicle E/E architectures will often include thousands of components, and include wiring harnesses with tens of branches and terminal connectors. In this context, the above system nevertheless allows relationships between components and wiring to be identified across multiple levels within the PREEvision environment. In turn, this allows for the assessment of failure probability of different E/E arrangements arising from features of their power distribution paths, encompassing awareness of components along that path, as well as the physical and geometric relationships between components, component terminals and wiring sections. In turn, this allows optimal E/E arrangements to be adopted, thereby provides for the development of safer E/E architectures.

It will be understood that the embodiment illustrated above show applications only for the purposes of illustration. In practice, embodiments may be applied to many different configurations, the detail of which being straightforward for those skilled in the art to implement.

## Claims

1. A computer-implemented method for selecting an optimal E/E arrangement from a plurality of E/E arrangement variants, the method comprising the steps of:
A) receiving component data for components used in the E/E arrangement variants;
B) receiving wiring data for each of the E/E arrangement variants;
C) selecting one of the E/E arrangement variants as a first E/E arrangement;
D) selecting a starting component in the first E/E arrangement;
E) identifying one or more terminals of the starting component using the component data;
F) identifying one or more wires connected to the one or more terminals using the wiring data;
G) generating a first data record for a first current path starting with a first wire and conducting through one or more intervening components to an end point, wherein the current path through each intervening component is identified based on identifying an output terminal for the respective component using the component data;
H) generating a first data log of the sequence of wires and intervening components along the first current path, starting with the selected component;
I) recursively interrogating the wiring and component data for each intervening component along the first current path in reverse order and updating the first data record to include one or more alternate first current paths starting with the respective intervening component and conducting forward through one or more intervening components to the end point or an alternate end point;
J) updating the first data log to record the sequences of wires and intervening components along each identified alternate first current path;
K) repeating steps G to J for any subsequent current paths starting with a subsequent wire connected to a terminal of the starting component; L) calculating a failure probability value for the first E/E arrangement based on a combination of reference failure values for the starting component and intervening components in the one or more current paths of the starting component;
M) repeating steps C to L for each of the further E/E arrangement variants; and
N) selecting the optimal E/E arrangement from the plurality of E/E arrangement variants based on, at least in part, their calculated failure probability values.

2. A method according to claim 1, wherein step L comprises generating a logical fault tree analysis structure by associating potential failure events within the E/E arrangement, and wherein the failure probability value is calculated based on combining the reference failure values according to the logical fault tree analysis structure.

3. A method according to claim 1 or 2, wherein the failure probability value is a failure in time value.

4. A method according to any preceding claim, wherein step L of selecting the optimal E/E arrangement is further based on a weighted cost value for each of the plurality of E/E arrangement variants.

5. A method according to any preceding claim, wherein the wiring data comprises at least one of:
circuit data for providing information regarding the connections of components within circuits, and
wiring harness data for providing information regarding the connections of components through the wiring harness.

6. A method according to any preceding claim, wherein the component data comprises specification data for providing information regarding the internal connections and terminals of the components.

7. A method according to claim 2, further comprising the step of generating a fault tree based on the logical fault tree analysis structure.

8. A method according to any preceding claim, wherein step D of selecting a starting component comprises retrieving a list of potential starting components and identifying a starting component within the E/E arrangement according to the list of potential starting components.

9. A method according to any preceding claim, further comprising the step of repeating steps D to L for a second or subsequent starting component.

10. A method according to any preceding claim, wherein the end point is one of a ground and a power source.

11. A non-transitory computer readable medium storing software for selecting an optimal E/E arrangement from a plurality of E/E arrangement variants and comprising instructions which, when executed by a processor, perform the steps of:
A) receiving component data for components used in the E/E arrangement variants;
B) receiving wiring data for each of the E/E arrangement variants;
C) selecting one of the E/E arrangement variants as a first E/E arrangement;
D) selecting a starting component in the first E/E arrangement;
E) identifying one or more terminals of the starting component using the component data;
F) identifying one or more wires connected to the one or more terminals using the wiring data;
G) generating a first data record for a first current path starting with a first wire and conducting through one or more intervening components to an end point, wherein the current path through each intervening component is identified based on identifying an output terminal for the respective component using the component data;
H) generating a first data log of the sequence of wires and intervening components along the first current path, starting with the selected component;
I) recursively interrogating the wiring and component data for each intervening component along the first current path in reverse order and updating the first data record to include one or more alternate first current paths starting with the respective intervening component and conducting forward through one or more intervening components to the end point or an alternate end point;
J) updating the first data log to record the sequences of wires and intervening components along each identified alternate first current path;
K) repeating steps G to J for any subsequent current paths starting with a subsequent wire connected to a terminal of the starting component;
L) calculating a failure probability value for the first E/E arrangement based on a combination of reference failure values for the starting component and intervening components in the one or more current paths of the starting component;
M) repeating steps C to L for each of the further E/E arrangement variants; and
N) selecting the optimal E/E arrangement from the plurality of E/E arrangement variants based on, at least in part, their calculated failure probability values.

12. A non-transitory computer readable medium according to claim 11, wherein step L comprises generating a logical fault tree analysis structure by associating potential failure events within the E/E arrangement, and wherein the failure probability value is calculated based on combining the reference failure values according to the logical fault tree analysis structure.

13. A non-transitory computer readable medium according to claim 12, further comprising instructions which, when executed by a processor, perform the step of generating a fault tree based on the logical fault tree analysis structure.

14. A system for selecting an optimal E/E arrangement from a plurality of E/E arrangement variants, the system comprising:
an input block for receiving component data for components used in the E/E arrangement variants, and for receiving wiring data for each of the E/E arrangement variants;
a selecting block for selecting each E/E arrangement variants, and for selecting a starting component in each E/E arrangement;
a calculation block for identifying one or more terminals of each starting component using the component data, and for identifying one or more wires connected to the one or more respective terminals using the wiring data, and for generating a first data record for a first current path starting with a first wire and conducting through one or more intervening components to an end point, wherein the current path through each intervening component is identified based on identifying an output terminal for the respective component using the component data;
an output block for generating first data logs of the sequence of wires and intervening components along each first current path, starting with the selected component; and
wherein the calculation block recursively interrogates the wiring and component data for each intervening component along each first current path in reverse order and updates each first data record to include one or more alternate first current paths starting with the respective intervening component and conducting forward through one or more intervening components to the end point or an alternate end point,
wherein the output block updates each first data log to record the sequences of wires and intervening components along each identified alternate first current path, and
wherein the calculation block generates data logs and recursively interrogates the wiring and component data for any subsequent current paths starting with a subsequent wire connected to a terminal of the respective starting component, and
wherein the output block further comprises a failure probability determination module for calculating a failure probability value for each E/E arrangement based on a combination of reference failure values for the respective starting component and intervening components in the one or more current paths of the respective starting component, and
wherein the output block further selects the optimal E/E arrangement from the plurality of E/E arrangement variants based on, at least in part, their calculated failure probability values.

15. A system according to claim 14, further comprising wherein the output block further generates a logical fault tree analysis structure by associating potential failure events within the E/E arrangement, and wherein the failure probability value is calculated based on combining the reference failure values according to the logical fault tree analysis structure.
